# DEMANDE DE BREVET EUROPEEN

(11) **EP 2 163 426 A1**
(43) Date de publication de la demande: **17.03.2010**
(21) Numéro de dépôt: 09290695.7
(22) Date de dépôt: 10.09.2009
(51) Int. Cl.: B60N 2/48

(54) **Appui-tête de siège de véhicule automobile**

(30) Priorité: 16.09.2008 FR 0805092
(71) Demandeur: Centre d'etude et de recherche pour l'automobile (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un appui-tête (1) de siège de véhicule automobile comprenant une armature (2) de montage, la partie supérieure de ladite armature étant disposée entre une coque avant (3) d'appui et une coque arrière (4) de masquage, ladite coque avant étant associée par emboîtement à ladite armature, et ladite coque arrière étant associée à ladite coque avant, ladite coque arrière comprenant au moins un moyen de verrouillage (5) agencé de sorte à empêcher un déboîtement de ladite coque avant de ladite armature.

## Description

L'invention concerne un appui-tête de siège de véhicule automobile.

Il est connu de réaliser un appui-tête de siège de véhicule automobile comprenant une armature de montage, la partie supérieure de ladite armature étant disposée entre une coque avant d'appui, destinée à recevoir un coussin d'appui, et une coque arrière de masquage, ladite coque avant étant associée par emboîtement à ladite armature, et ladite coque arrière étant associée à ladite coque avant.

Dans un tel agencement, en raison de l'espace nécessaire au montage de l'armature sur la coque avant, se présente le risque d'un déboîtement accidentel de la coque avant de l'armature, notamment lors d'un choc de la tête du passager contre l'appui-tête, ce qui ne permet pas de garantir la position de l'appui-tête et présente donc un danger pour le passager.

L'invention a pour but de pallier cet inconvénient.

A cet effet, l'invention propose un appui-tête de siège de véhicule automobile comprenant une armature de montage, la partie supérieure de ladite armature étant disposée entre une coque avant d'appui et une coque arrière de masquage, ladite coque avant étant associée par emboîtement à ladite armature, et ladite coque arrière étant associée à ladite coque avant, ladite coque arrière comprenant au moins un moyen de verrouillage agencée de sorte à empêcher un déboîtement de ladite coque avant de ladite armature.

Dans cette description, les termes de positionnement dans l'espace (bas, supérieur, inférieur, longitudinal, avant, arrière, horizontal, dessous,...) sont pris en référence à l'appui-tête disposé dans le véhicule.

Avec l'agencement proposé, le risque d'un déboîtement accidentel de la coque avant de l'armature est évité.

D'autres particularités et avantages de l'invention apparaîtront dans la description qui suit, faite en référence aux figures jointes dans lesquelles :

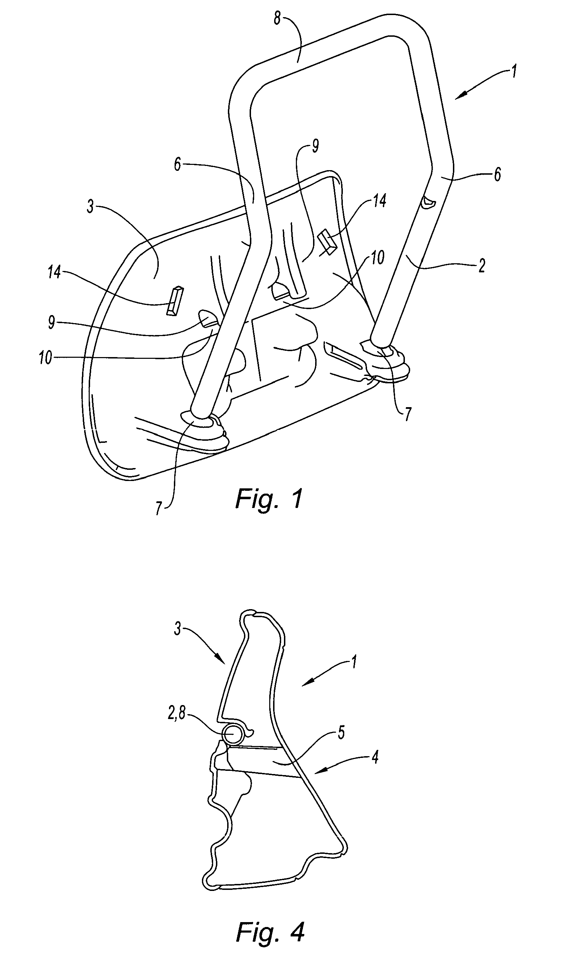

- la figure 1 est une vue partielle en perspective éclatée, représentant l'armature et la coque avant d'un appui-tête selon une réalisation,
- les figures 2 représentent, selon une première coupe longitudinale, différentes étapes du montage en emboîtement de la coque avant sur l'armature de l'appui-tête de la figure 1,
- les figures 3 représentent, selon une deuxième coupe longitudinale, différentes étapes du montage en emboîtement d'une coque arrière sur la coque avant de l'appui-tête de la figure 1,
- la figure 4 représente, selon une troisième coupe longitudinale, l'appui-tête de la figure 1 une fois monté.

En référence aux figures, on décrit un appui-tête 1 de siège de véhicule automobile comprenant une armature 2 de montage, la partie supérieure de ladite armature étant disposée entre une coque avant 3 - notamment en matériau plastique injecté - d'appui destinée à recevoir un coussin d'appui non représenté et une coque arrière 4 - notamment en matériau plastique injecté - de masquage, ladite coque avant étant associée par emboîtement à ladite armature, et ladite coque arrière étant associée à ladite coque avant, ladite coque arrière comprenant au moins un moyen de verrouillage 5 agencé de sorte à empêcher un déboîtement de ladite coque avant de ladite armature.

Le moyen de verrouillage 5 est sous forme d'une saillie formant butée.

L'armature 2 présente une forme générale en U renversé - notamment à base de tube métallique plié - l'entretoise centrale 8 du U s'emboîtant dans au moins un - ici deux - clip 9 issu de la coque avant 3.

Les branches 6 du U passent par deux orifices 7 respectifs prévus dans la coque avant 3.

La partie supérieure de l'armature 2 est repliée vers l'avant.

Le clip 9 présente une ouverture 10 dirigée vers le bas, le moyen de verrouillage 5 s'étendant en dessous de - et contre - l'entretoise centrale 8 de sorte à empêcher une extraction de ladite entretoise dudit clip.

La réalisation décrite prévoit un moyen de verrouillage 5 correspondant respectivement à chaque clip 9.

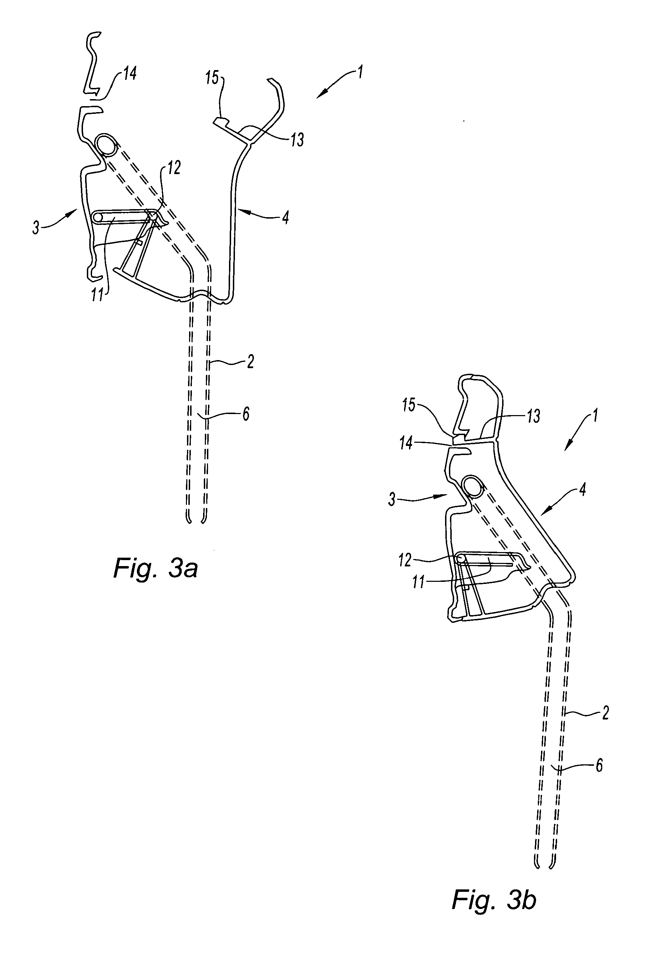

La coque avant 3 comprend un moyen de guidage 11 horizontal - ici sous forme de tranchée - d'un ergot 12 inférieur issu de la coque arrière 4, de sorte à permettre un guidage horizontal de la partie inférieure de ladite coque arrière lors de son montage (figure 3a), ce qui facilite le bon positionnement de ladite coque arrière pour réaliser son emboîtement sur la coque avant 3 (figure 3b).

La réalisation décrite prévoit un moyen de guidage 11 de chaque côté de l'appui-tête 1 dans chacun desquels est guidé un ergot respectif 12.

La coque arrière 4 est associée par emboîtement à la coque avant 3.

La coque arrière 4 est associée à la coque avant 3 par au moins une patte 13 issue de ladite coque arrière, ladite patte comprenant un harpon 15 d'extrémité coopérant avec un moyen de réception 14 - ici sous forme d'orifice - prévu dans ladite coque avant.

La réalisation proposée prévoit deux pattes 13 avec deux moyens de réception 14 correspondants.

De façon non représentée, l'appui-tête 1 comprend un coussin disposé contre la face avant de la coque avant 3, ledit coussin comprenant au moins un bossage - ou un creux - coopérant avec un creux - ou un bossage - réciproque prévu sur ladite coque avant de sorte à indexer le positionnement dudit coussin par rapport à ladite coque avant.

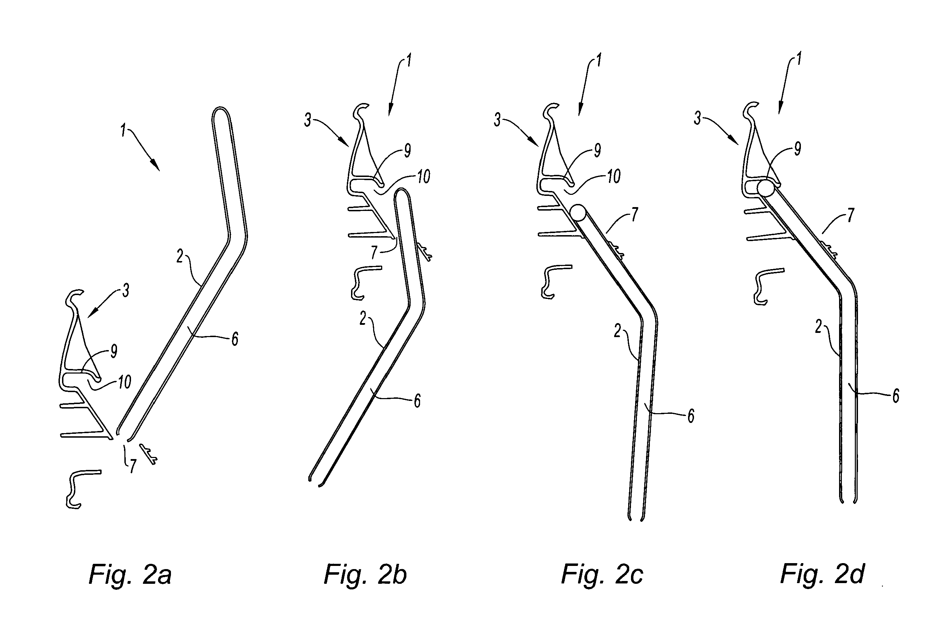

On décrit à présent un procédé de montage de l'appui-tête 1 sus décrit, ledit procédé comprenant les étapes de :
- introduire (figure 2a) et faire coulisser de biais les branches 6 de l'armature 2 dans les orifices 7 jusqu'à ce que l'entretoise 8 se trouve en dessous du clip 9 (figure 2b),
- faire pivoter partiellement l'armature 2 de sorte à positionner ladite entretoise en regard de l'ouverture dudit clip (figure 2c),
- emboîter ladite entretoise dans ledit clip (figure 2d),
- monter la coque arrière 4 de sorte à empêcher un déboîtement de la coque avant 3 de ladite armature.

## Revendications

1. Appui-tête (1) de siège de véhicule automobile comprenant une armature (2) de montage, la partie supérieure de ladite armature étant disposée entre une coque avant (3) d'appui et une coque arrière (4) de masquage, ladite coque avant étant associée par emboîtement à ladite armature, et ladite coque arrière étant associée à ladite coque avant, ledit appui-tête étant **caractérisé en ce que** ladite coque arrière comprend au moins un moyen de verrouillage (5) agencé de sorte à empêcher un déboîtement de ladite coque avant de ladite armature.

2. Appui-tête selon la revendication 1 **caractérisé en ce que** le moyen de verrouillage (5) est sous forme d'une saillie formant butée.

3. Appui-tête selon l'une quelconque des revendications 1 ou 2, **caractérisé en ce que** l'armature (2) présente une forme générale en U renversé, l'entretoise centrale (8) du U s'emboîtant dans au moins un clip (9) issu de la coque avant (3).

4. Appui-tête selon la revendication 3, **caractérisé en ce que** les branches (6) du U passent par deux orifices (7) respectifs prévus dans la coque avant (3).

5. Appui-tête selon l'une quelconque des revendications 3 ou 4, **caractérisé en ce que** le clip (9) présente une ouverture (10) dirigée vers le bas, le moyen de verrouillage (5) s'étendant en dessous de - et contre - l'entretoise centrale (8) de sorte à empêcher une extraction de ladite entretoise dudit clip.

6. Appui-tête selon l'une quelconque des revendications 1 à 5, **caractérisé en ce que** la coque avant (3) comprend un moyen de guidage (11) horizontal d'un ergot (12) inférieur issu de la coque arrière (4) , de sorte à permettre un guidage horizontal de la partie inférieure de ladite coque arrière lors de son montage.

7. Appui-tête selon l'une quelconque des revendications 1 à 6, **caractérisé en ce que** la coque arrière (4) est associée par emboîtement à la coque avant (3).

8. Appui-tête selon la revendication 7, **caractérisé en ce que** la coque arrière (4) est associée à la coque avant (3) par au moins une patte (13) issue de ladite coque arrière, ladite patte comprenant un harpon (15) d'extrémité coopérant avec un moyen de réception (14) prévu dans ladite coque avant.

9. Appui-tête selon l'une quelconque des revendications 1 à 8, **caractérisé en ce qu'**il comprend un coussin disposé contre la face avant de la coque avant (3), ledit coussin comprenant au moins un bossage - ou un creux - coopérant avec un creux - ou un bossage - réciproque prévu sur ladite coque avant de sorte à indexer le positionnement dudit coussin par rapport à ladite coque avant.
